(19) Europäisches Patentamt

European Patent Office

Office européen des brevets

(11) Numéro de publication : **0 191 683 B1**

(12) **FASCICULE DE BREVET EUROPEEN**

(45) Date de publication du fascicule du brevet :
17.04.91 Bulletin 91/16

(51) Int. Cl.⁵ : **B60P 1/48**

(21) Numéro de dépôt : **86400182.1**

(22) Date de dépôt : **29.01.86**

(54) **Benne amovible portée sur véhicule automobile, basculante et déchargeable en position toujours horizontale quelle que soit la répartition de sa charge.**

(30) Priorité : 31.01.85 FR 8501599
25.09.85 FR 8514627

(43) Date de publication de la demande :
20.08.86 Bulletin 86/34

(45) Mention de la délivrance du brevet :
17.04.91 Bulletin 91/16

(84) Etats contractants désignés :
AT BE CH DE GB IT LI LU NL SE

(56) Documents cités :
DE-A- 1 923 774
DE-A- 2 200 879
FR-A- 791 437
US-A- 3 716 151
US-A- 3 904 054

(73) Titulaire : Amiel, Raoul
La Bégude RN 113
F-34290 Servian (FR)

(72) Inventeur : Amiel, Raoul
La Bégude RN 113
F-34290 Servian (FR)

(74) Mandataire : Chauchard, Robert et al
c/o Cabinet Malémont 42, avenue du Président Wilson
F-75116 Paris (FR)

## Description

La présente invention concerne un dispositif de déchargement d'une benne amovible hors du véhicule qui la porte, conforme au préambule de la revendication 1.

Les bennes portées sur véhicules automobiles en vue du transport de matériaux en vrac sont souvent basculantes, mais inamovibles par rapport au véhicule porteur, ce qui présente l'inconvénient d'immobiliser le véhicule automobile porteur durant tout le chargement de la benne, ce qui peut être long lorsqu'il s'agit de transport de démolitions dont le chargement ne peut s'effectuer qu'au fur et à mesure de l'avancement des travaux.

Il a donc été créé, pour satisfaire ce besoin particulier, des bennes amovibles qui sont elles-mêmes déchargeables, ce qui permet de libérer le véhicule automobile porteur durant tout le temps de leur remplissage, après qu'elles ont été posées sur le sol.

De telles bennes sont généralement des bennes prismatiques selon un trapèze, en coupe longitudinale, dont le peit côté constitue la base de la benne. Elles sont déchargées du véhicule porteur puis chargées sur lui à l'aide de deux bras latéraux qui sont articulés de part et d'autre du véhicule et manoeuvrés à l'aide de vérins hydrauliques, l'extrémité libre de ces bras s'ajustant sur des tourillons placés extérieurement au centre de la grande base supérieure du trapèze de part et d'autre de la benne, ou comportant des chaînes qui viennent se fixer à des tourillons fixés extérieurement aux quatre angles de la benne.

L'inconvénient principal d'un tel dispositif est la nécessité de conserver l'équilibre de la benne au cours de son chargement sur le véhicule, d'autant plus que le matériau transporté est généralement du tout-venant, tel que des décombres, qui ne peut être uniformément réparti au cours du remplissage.

En effet, quand elles sont suspendues au niveau de deux tourillons médians, le chargement de telles bennes doit être équilibré pour éviter qu'elles ne se renversent au cours de leur manoeuvre. C'est la raison pour laquelle leur profil en long est trapézoïdal afin de centrer le plus possible la charge sur leur axe transversal de suspension. Mais cette solution réduit considérablement leur capacité, ce qui réduit leur amortissement tout en augmentant le coût du transport.

Lorsque les bennes sont suspendues par quatre chaînes latérales fixées à l'extrémité de chacun des deux bras de manoeuvre, cela présente l'inconvénient de nécessiter une grande attention de la part du conducteur de l'engin au cours de la manoeuvre de chargement sur le véhicule afin que, par suite de l'inertie de la masse manoeuvrée, il ne se produise pas un mouvement intempestif de balançoire qui amènerait la benne remplie à heurter la cabine du véhicule qui la prend en charge.

DE-A-2 200 879 décrit un dispositif de déchargement d'une benne amovible hors du véhicule porteur, qui remédie aux inconvénients précités. Ce dispositif comprend plus précisément sur chaque côté longitudinal du châssis du véhicule porteur, deux bras latéraux parallèles, aptes à être manoeuvrés simultanément et articulés, par une première extrémité, audit châssis et, par la seconde extrémité, à un fléau latéral longitudinal respectif qui, avec son symétrique situé de l'autre côté du châssis, supporte la benne par l'intermédiaire d'élingues fixées de façon amovible à cette dernière.

Grâce à ce dispositif connu, la benne est manoeuvrée en vue de son déchargement du véhicule porteur pour être mise au sol et, inversement, pour son chargement, pleine, sur le véhicule porteur au moyen du couple de fléaux mobiles latéraux parallèles au châssis, formant avec les bras qui les portent des parallélogrammes déformables, et, grâce au fait que la benne est suspendue, par quatre élingues fixées à chacun de ses angles, auxdits fléaux mobiles, ceux-ci restent constamment dans leur position parallèle au châssis du véhicule tout au long de leurs manoeuvres, maintenant donc ainsi la benne et sa charge dans une position permanente parallèle au châssis du véhicule, donc généralement horizontale, ce qui évite tout déplacement spontané de sa charge, évitant du même fait des mouvements intempestifs de la benne qui pourraient entraîner son renversement accidentel au cours de son chargement sur le véhicule porteur.

Cependant, avec le dispositif selon DE-A-2 200 879, il n'est pas possible de vider la benne de son contenu, par simple basculement de cette dernière sur le châssis du véhicule porteur, autour de son arête transversale arrière inférieure, avec mise en place d'un haillon arrière basculant, comme la chose est possible pour les bennes parallélépipèdiques non-amovibles en vue plus particulièrement du déchargement de matériaux en vrac.

La présente invention se propose de remédier à cet inconvénient et pour ce faire, elle a pour objet un dispositif de déchargement d'une benne hors de son véhicule porteur, tel que défini dans le préambule de la revendication 1 et qui se caractérise en ce que la benne est munie latéralement, à la base de chacun de ses montants arrière, d'un tourillon qui, lors de la mise en place de la benne sur le châssis du véhicule, vient se loger spontanément dans un berceau respectif en forme de V solidaire de ce dernier.

De préférence et selon la revendication 2, chaque berceau se prolonge vers l'arrière par une glissière inclinée qui conduit le tourillon correspondant vers l'axe du berceau, lors de son introduction dans ce dernier.

Les berceaux du châssis, qui reçoivent les tourillons de la benne, jouent le rôle de paliers qui permettent, après décrochage des deux élingues arrière, un basculement vers l'arrière de la benne autour de son arête transversale arrière inférieure.

Ainsi, l'invention permet d'utiliser comme bennes amovibles déchargeables, des bennes parallélépipédiques à haillon arrière basculant qui, lorsqu'on le souhaitera, pourront être vidées de leur contenu par simple basculement, en restant sur leur véhicule porteur, maintenues suspendues aux fléaux par les élingues avant.

Des caractéristiques secondaires de la présente invention sont définies dans les sous revendications 3 à 10.

Les dessins annexés, donnés à titre d'exemple seulement, montrent un mode de réalisation du dispositif objet de l'invention.

La figure 1 est une vue schématique en élévation, de profil, du dispositif objet de l'invention, la benne amovible étant en place sur le plateau du véhicule porteur.

La figure 2 est une vue schématique en élévation, de profil, du même dispositif, la benne se trouvant posée sur le sol, hors du véhicule, à l'instant où elle va être chargée sur ledit véhicule.

La figure 3 est une vue schématique en élévation, de profil, du même dispositif, la benne se trouvant en cours de basculement pour le déchargement des matériaux transportés en vrac.

La figure 4 est une vue schématique rompue, en élévation, de profil, de la benne montrant le dispositif d'ancrage et de rotation de celle-ci sur le plateau du véhicule porteur.

La figure 5 est une vue schématique en élévation de profil montrant les rampes de positionnement de la benne sur le chassis permettant de l'asseoir toujours correctement sur celui-ci même lorsque le camion est placé sur une pente.

Tel qu'il est représenté, le dispositif objet de l'invention comporte essentiellement, selon un mode de réalisation, de façon symétrique par rapport à son axe longitudinal, les deux bras 1 et 2 articulés à leur base sur le longeron latéral du chassis 3 du véhicule 4 et à leur autre extrémité sur le fléau 5, formant ainsi ensemble un parallélogramme déformable portant le fléau 5.

Le bras 1 est le bras porteur qui assume le charge de la benne.

Il est manoeuvré dans sa rotation autour de son extrémité inférieure par le vérin hydraulique 6 qui prend appui sur le chassis 3 par l'intermédiaire de l'équerre 7.

La benne amovible 8, qui présente la forme classique parallélépipédique munie du haillon arrière basculant 9, est donc suspendue au fléau 5 au moyen des chaînes et élingues 10 accrochées extérieurement de façon amovible à ses quatre angles.

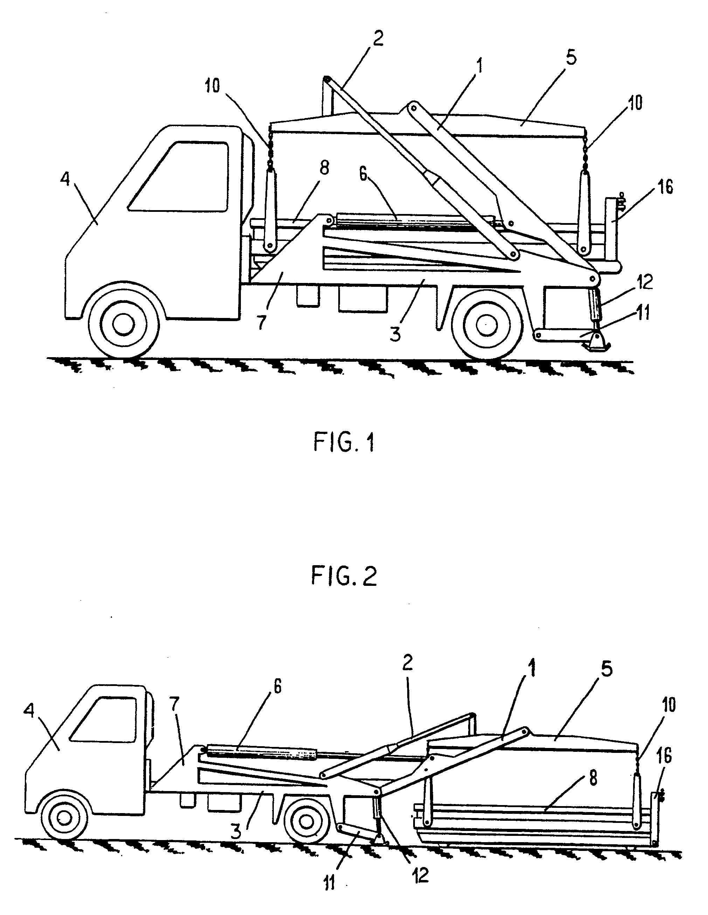

Le dispositif étant ainsi constitué symétriquement de part et d'autre du chassis, on comprend, selon les figures 1 et 2, que la manoeuvre des vérins latéraux 6 provoque la rotation des parallélogrammes déformables constitués par les bras 1 et 2 et les fléaux 5, ce qui provoquera le déplacement toujours parallèle au chassis de la benne 8 qui s'élèvera au-dessus du plateau du véhicule 4 et sera ainsi transportée hors de ce dernier jusqu'à être posée sur le sol (Fig. 2). Et, après que les élingues 10 auront été détachées, elle sera abandonnée en vue de son chargement en vrac, libérant ainsi le véhicule L qui pourra ainsi effectuer une même opération avec une autre benne sur un autre chantier.

Le chargement sur le véhicule 4 de la benne remplie s'effectuera avec la même facilité de la manière inverse, la benne restant toujours parallèle au plateau du véhicule si même son chargement n'est pas lui-même parfaitement équilibré.

Au cours de la manoeuvre de la benne 8 le chassis 3 est stabilisé au moyen des pieds de biche articulés 11 manoeuvrés par les vérins 12.

Si le maintien horizontal de la benne au cours de ses manoeuvres permet de pallier les mauvaises répartitions des charges par rapport au plan vertical médian transversal de ladite benne, il ne permet pas de pallier les mauvaises répartitions des charges par rapport au plan vertical longitudinal qui peuvent provoquer le gauchissement de l'ensemble du système.

Pour cela, les deux axes de rotation, haut et bas, du bras principal 1 sont reliés ensemble de façon rigide de part et d'autre du véhicule par une entretoise tubulaire qui, travaillant à la torsion, s'oppose au gauchissement du cadre ainsi formé.

Les articulations supérieures des bras 2 sont aussi reliées entre elles de façon rigide par une entretoise.

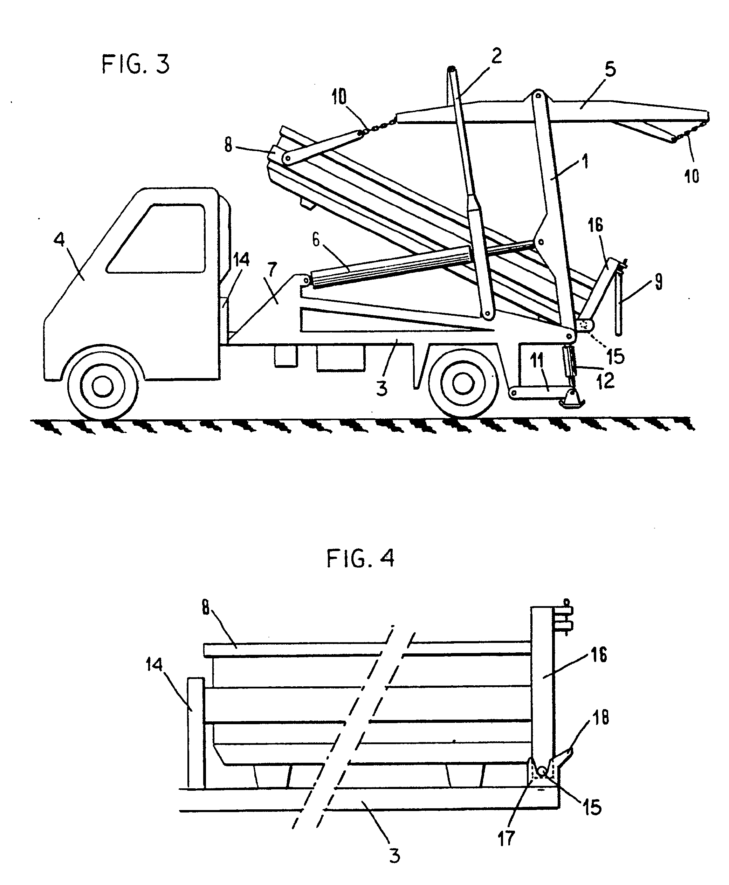

Outre ces avantages, on constate, (Fig. 3) qu'un tel dispositif n'empêche pas le déchargement de la benne selon la méthode connue de son basculement qui provoque l'ouverture automatique de son haillon arrière basculant 9 sous la poussée du matériau contenu dans la benne.

En effet, il suffit de détacher les élingues 10 arrière pour que la benne 8, qui n'est plus sollicitée par le fléau 5 qu'au niveau de ses élingues 10 avant, soit entraînée à basculer autour de son point d'articulation arrière 15 (Fig. 4) lors de la manoeuvre des bras 1, ce qui conserve à ce dispositif l'avantage des bennes connues non amovibles.

Afin de faciliter la mise en place de la benne sur le plateau aussi bien que son basculement arrière, et afin de rendre ces opérations quasiment automatiques, le plateau du véhicule est équipé (Fig. 3 et 4) de la butée avant 14 contre laquelle vient se situer la benne 8 lorsqu'elle est posée sur le plateau, le tourillon 15 dont est munie la base de chacun de ses montants latéraux arrière 16 venant alors se loger spontanément dans chacun des berceaux 17 en forme de V qui assure la retenue de la benne en position et joue le rôle de palier lors de son basculement.

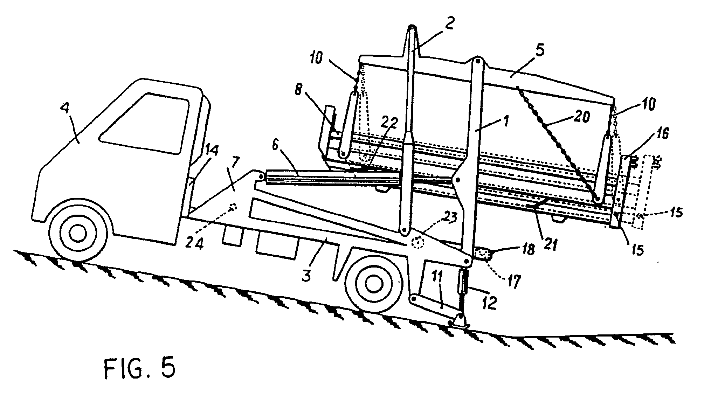

Chacun des berceaux latéraux 17 est prolongé à l'arrière par la glissière inclinée 18 qui assure le guidage du tourrillon 15 dans le cas où, par suite de la position inclinée du véhicule (fig. 5), donc de son chassis, ce tourillon 15 ne se présenterait pas à l'aplomb exact du V dudit berceau.

Mais dans ce cas où le véhicule porteur de la benne se trouve stationné sur une côte à forte pente (fig. 5) on constate que la benne suspendue aux fléaux par les élingues se déporte vers l'arrière, si bien que les glissières 18 peuvent ne pas être suffisantes pour que les tourillons 15 s'engagent dans les berceaux 17.

En effet (selon la fig. 5) on voit, tracée en pointillés, la position que prendrait la benne 8 au cours de sa manoeuvre de chargement sur le plateau, lorsque le véhicule est stationné sur une côte. On voit ainsi que la benne 8 pendue sur chacun de ses flancs aux fléaux 5 par l'intermédiaire des élingues 10 se déporterait vers l'arrière d'autant plus que la pente sur laquelle est stationné le véhicule est forte, au point que les tourillons 15 peuvent ne plus pouvoir être amenés dans les berceaux 17 lorsque la benne 8 atteint le plateau 3, et ce malgré la présence du plan incliné 18 quine peut être suffisamment développé vers l'arrière pour corriger des déports importants sans constituer lui-même une gêne par son encombrement excessif hors du gabarit du véhicule.

Le dispositif comporte donc sur chacun de ses flancs la liaison 20 inextensible, ici constituée par une chaîne, destinée à former une triangulation indéformable s'opposant au déport arrière de la benne en toutes circonstances. Cette liaison 20 est fixée au point d'ancrage des élingues arrière 10 d'une part et d'autre part au bras arrière des fléaux 5 dans une position à 45° environ par rapport au plan général de la benne 8.

La fixation desdites chaînes 20 aux points d'ancrage des élingues arrière 10 permet de détacher ces chaînes en même temps que les élingues correspondantes lorsque la benne 8 est posée au sol, ou lorsqu'il est nécessaire de la basculer autour des tourillons 15 placés dans les berceaux 17.

Ce dispositif permettant d'asseoir parfaitement la benne sur le plateau en toute position du véhicule porteur est complété par les chemins de roulement latéraux inclinés, 21 et 22 placés extérieurement sur chaque flanc de la benne 8, qui, à la fin du chargement de la benne sur le plateau 3, viennent en contact réciproquement, à leur partie avant, avec les galets pivotants 23 et 24 portés intérieurement par la structure verticale fixe latérale du plateau 3, conduisant ainsi, par l'effet de leur pente, la benne 8 à se déplacer vers l'avant du véhicule jusqu'à ce que les tourillons 15 viennent se placer dans les berceaux 17 quel que soit le défaut de positionnement qui pourrait encore subsister au cours de la manoeuvre.

Le dispositif étant ainsi constitué on comprend que, quelle que soit la position du véhicule, la benne 8 se placera toujours convenablement par rapport aux berceaux 17 qui doivent recevoir les tourillons 15, la liaison inextensible 20 assurant le maintien en position correcte en cas de stationnement du camion sur une côte, la même manoeuvre effectuée dans une descente étant automatiquement contrôlée par le fait que l'avant de la benne vient prendre appui contre le butoir 14 assurant ainsi la mise en place correcte de la benne quelle que soit la pente considérée. Et les chemins de roulement 21 et 22 assurent une finition parfaite de la manoeuvre en toutes circonstances, la benne restant toujours parallèle au plateau qui la reçoit.

Et cette double possibilité de pouvoir manoeuvrer la benne selon une position constamment parallèle au plateau du véhicule, quelle que soit la répartition de la charge, aussi bien que de la vider de son contenu par son simple basculement autour des tourillons arrière permet d'envisager l'utilisation d'un tel dispositif pour des travaux quine pourraient pas être accomplis avec des bennes amovibles du type trapézoïdal connu.

C'est ainsi que dans les entreprises de maçonnerie elles-mêmes, alors que les bennes amovibles trapézoïdales ne peuvent être utilisées que pour le transport hors des chantiers des décombres de démolition, un véhicule équipé du dispositif objet de l'invention peut être utilisé pour l'approvisionnement de plusieurs chantiers en toutes sortes de matériaux. S'il s'agit en effet de sable ou de gravier, le chargement sera déversé sur le sol par simple basculement de la benne sans qu'elle quitte le véhicule porteur.

S'il s'agit de tout autre matériau, c'est la benne elle-même qui peut être posée sur le sol, le véhicule étant alors utilisé pour prendre une benne vide sur ce chantier ou sur un autre précédemment approvisionné de la même manière en vue d'effectuer un autre transport au profit d'un troisième chantier pendant le déchargement du second.

La parfaite constance de la position horizontale de la benne constitue dans ce cas un avantage important, car, en l'absence de cette stabilité au cours du chargement de la benne sur le véhicule, la grande fluidité de la marchandise contenue provoquerait un déplacement rapide de la masse dans la benne dès que celle-ci aurait perdu sa position horizontale, aggravant ainsi le déséquilibre amorcé jusqu'à risquer de provoquer le renversement complet de la benne au cours de son transfert sur le plateau du véhicule porteur ; le déchargement de ces déchets s'effectuant par simple basculement de la benne vers l'arrière.

Ces mêmes avantages permettent aussi d'utiliser le dispositif objet de l'invention pour le transport des fruits hors du lieu de leur récolte.

De même des sangles peuvent être fixées aux élingues 10 avant et arrière, aux lieu et place de la benne 8, lesdites sangles pouvant être passées sous une charge quelconque, telle qu'un véhicule devant être porté, qui peut ainsi être chargé sur le plateau 3 ou déchargé tout en restant constamment parallèle au sol et au plateau qui peut ainsi le recevoir au moyen de la seule manoeuvre des bras 1 et 2.

L'invention permet donc de procéder à la manoeuvre de chargement de la benne quelle que soit la position du véhicule qui soit la recevoir, la manoeuvre des vérins 12 permettant de corriger le dévers latéral.

L'invention n'est pas limitée à l'exemple ou aux exemples qui en ont été décrits, toute variante, considérée comme équivalence, ne pouvant en modifier la portée.

C'est ainsi que tout autre mode de réalisation permettant d'assurer le parallélisme constant du fléau 5 et du plateau 3 du véhicule peut être prévu de façon équivalente, tel que le dispositif connu de deux pignons dentés identiques rendus solidaires chacun du fléau 5 et du plateau 3 au niveau de chaque articulation du bras 1 et reliés entre eux par une chaîne. Le bras 1, qui dans ce cas est unique de part et d'autre du chassis, étant constitué par deux coquilles métalliques assemblées contenant l'ensemble mécanique des pignons et de la chaîne qui les relie.

Un tel dispositif peut être utilisé sur véhicule automobile pour les chantiers de construction, les abattoirs, la voierie, les exploitations agricoles, aussi bien que sur remorque routière ou même sur des embarcations fluviales ou maritimes pour poser à quai des bennes ou des containers qui nécessitent le maintien du chargement dans une position constante par rapport au sol.

## Revendications

1. Dispositif de déchargement d'une benne amovible (8) hors du véhicule (4) qui la porte, ce dispositif comprenant, sur chaque côté longitudinal du châssis en forme de plateau (3) du véhicule porteur (4), un ou plusieurs bras latéraux (1, 2) aptes à être manoeuvrés simultanément et articulés, par une première extrémité, audit châssis et, par la seconde extrémité, à un fléau latéral longitudinal respectif qui, avec son symétrique situé de l'autre côté du châssis, supporte la benne (8) par l'intermédiaire d'élingues (10) fixées de façon amovible à cette dernière, caractérisé en ce que la benne (8) est munie latéralement, à la base de chacun de ses montants arrière (16), d'un tourillon (15) qui, lors de la mise en place de la benne (8) sur le châssis du véhicule (4), vient se loger spontanément dans un berceau respectif en forme de V (47) solidaire de ce dernier.

2. Dispositif selon la revendication 1, caractérisé en ce que chaque berceau (17) se prolonge vers l'arrière par une glissière inclinée (18) qui conduit le tourillon (15) correspondant vers l'axe du berceau, lors de son introduction dans ce dernier.

3. Dispositif selon la revendication 1 ou 2, caractérisé en ce qu'une liaison inextensible (20) est installée, selon un angle de 45° environ par rapport au plan du plateau du châssis (3) du véhicule porteur (4), entre l'arrière de chacun des flancs latéraux de la benne et chacun des bras arrière des fléaux (5).

4. Dispositif selon la revendication 3, caractérisé en ce que les liaisons inextensibles (20) sont des chaînes métalliques.

5. Dispositif selon la revendication 3 ou 4, caractérisé en ce que les liaisons inextensibles (20), installées de part et d'autre de la benne (8), sont rendues solidaires de chacun des flancs latéraux de celle-ci au point d'ancrage de l'extrémité basse des élingues arrière (10), pour pouvoir être détachées de ce point d'ancrage en même temps que ces dernières.

6. Dispositif selon l'une quelconque des revendications 1 à 5, caractérisé en ce qu'une charge quelconque, telle qu'un véhicule, peut être chargée sur le châssis (3) du véhicule porteur, ou déchargée de celui-ci, par la seule manoeuvre des fléaux (5), des sangles étant passées transversalement sous ladite charge ou sous le châssis dudit véhicule porté et étant rendues solidaires de chacune des extrémités basses des élingues (10) avant et arrière.

7. Dispositif selon l'une quelconque des revendications 1 à 6, caractérisé en ce que la benne (8) comporte deux chemins de roulement inclinés (21, 22) placés extérieurement sur chacun de ses flancs latéraux, proches de chacune de ses extrémités avant et arrière, lesdits chemins de roulement coopérant avec des galets pivotants (23, 24) placés intérieurement sur des structures latérales verticales du châssis (3) du véhicule (4) en vue de conduire, par simple gravité, la benne (8) vers l'avant dudit châssis (3) au fur et à mesure que celle-ci s'assied sur ce dernier, ceci amenant automatiquement les tourillons arrière (15) à pénétrer dans les berceaux (17) qui constituent les éléments de verrouillage de la benne (8) sur lu plateau (3) en même temps que les paliers de rotation de celle-ci pour son basculement arrière.

8. Dispositif selon l'une quelconque des revendications 1 à 7, caractérisé en ce que le véhicule porteur (4) porte à l'avant une butée (14) qui, avec les berceaux (17), sert de moyen d'immobilisation de la benne (8) chargée sur le véhicule.

9. Dispositif selon l'une quelconque des revendications 1 à 8, caractérisé en ce que les fléaux latéraux longitudinaux (5) sont, chacun, portés par un bras unique articulé à l'une de ses extrémités sur ledit fléau et à son autre extrémité sur le châssis (3) du véhicule (4), ledit bras étant formé par deux coquilles assemblées contenant au niveau de l'articulation du châssis un pignon denté solidaire du châssis et au niveau de l'articulation du fléau (5) un pignon denté de même diamètre solidaire dudit fléau, ces deux pignons étant reliés ensemble par une chaîne continue engrenant avec eux.

10. Dispositif selon l'une quelconque des revendications 1 à 9, caractérisé en ce que les articulations supérieures des bras latéraux (1, 2) sont reliées entre elles par une première entretoise rigide et les articulations inférieures de ces mêmes bras sont reliées entre elles par une seconde entretoise rigide, ces deux entretoises formant avec les bras latéraux ainsi réunis un parallélogramme rigide.

## Ansprüche

1. Vorrichtung zum Ausladen eines abnehmbaren Kübels (8) aus dem letzteren tragenden Fahrzeug (4), mit einem oder mehreren auf jeder Längssseite des plattenförmigen Fahrgestells (3) des Trägerfahrzeugs (4) angeordneten Seitenarmen (1, 2), die gleichzeitig steuerbar sind und an einem Ende an dem Fahrgestell und am anderen Ende an einem jeweiligen seitlichen Längsbalken angelenkt sind, das mit seinem auf der anderen Seite des Fahrgestells angeordneten Gegenstück den Kübel (8) über an diesem abnehmbar befestigte Schlingen (10) trägt, dadurch gekennzeichnet, daß der Kübel (8) auf der Seite, am Fuß jedes seiner hinteren Ständer (16) mit einem Drehzapfen (15) versehen ist, der beim Aufsetzen des Kübels (8) auf das Fahrgestell des Fahrzeugs (4) spontan in eine jeweilige, an diesem angebrachte V-förmige Wiege (17) in Eingriff kommt.

2. Vorrichtung nach Patentanspruch 1, dadurch gekennzeichnet, daß sich jede Wiege (17) hinten in eine geneigte Rutsche (18) verlängert, die den entsprechenden Drehzapfen (15) bei Einführung in die Wiege in die Richtung auf deren Achse führt.

3. Vorrichtung nach Patentanspruch 1 oder 2, dadurch gekennzeichnet, daß eine nicht dehnbare Verbindung (20) zwischen dem Hinterteil jeder seitlichen Flanke des Kübels und jedem hinteren Arm der Balken (5) unter einem Winkel von etwa 45° bezüglich der Plattenebene des Fahrgestells (3) des Trägerfahrzeugs (4) montiert ist.

4. Vorrichtung nach Patentanspruch 3, dadurch gekennzeichnet, daß die nicht dehnbaren Verbindungen (20) Metall-Ketten sind.

5. Vorrichtung nach Patentanspruch 3 oder 4, dadurch gekennzeichnet, daß die beiderseits des Kübels (8) montierten, nicht dehnbaren Verbindungen (20) mit jeder seitlichen Flanke des Kübels am Verankerungspunkt des unteren Endes der hinteren Schlingen (10) derart verbunden sind, daß sie zusammen mit letzteren vom Verankerungspunkt weggeommen werden können.

6. Vorrichtung nach einem der Patentansprüche 1 bis 5, dadurch gekennzeichnet, daß eine beliebige Last, wie z.B. ein Fahrzeug, durch bloße Betätigung der Balken (5) auf das Fahrgestell (3) des Trägerfahrzeugs geladen oder vom diesem ausgeladen werden kann, wobei Gurtbänder unter die Last oder unter das Fahrgestell des getragenen Fahrzeugs quer durchgezogen und mit jedem unteren Ende der vorderen und hinteren Schlingen (lc) verbunden werden.

7. Vorrichtung nach einem der Patentansprüche 1 bis 6, dadurch gekennzeichnet, daß der Kübel (8) zwei geneigte Bahnen (21, 22) aufweist, die außen in der Nähe jedes seiner vorderen und hinteren Enden auf jeder seitlichen Flanke angeordnet sind, wobei die Bahnen mit innen auf vertikalen seitlichen Strukturen des Fahrgestelles (3) des Fahrzeugs (4) angeordneten Schwenkrollen (23, 24) zusammenwirken, so daß der Kübel (8) beim Aufsetzen auf das Fahrgestell (3) durch die bloße Schwerkraft in Richtung auf das Vorderteil des Fahrgestells (3) geführt wird, wodurch die hinteren Drehzapfen (15) selbständig in die Wiegen (17) eindringen, die die Verriegelungskörper des Kübels (8) auf der Platte (3) bilden und zugleich die Drehlager des Kübels zum Kippen desselben nach hinten.

8. Vorrichtung nach einem der Patentansprüche 1 bis 7, dadurch gekennzeichnet, daß das Trägerfahrzeug (4) vorne einen Anschlag (14) hat, der mit den Wiegen (17) als Festhaltemittel des auf dem Fahrzeuggeladenen Kübels (8) dient.

9. Vorrichtung nach einem der Patentansprüche 1 bis 8, dadurch gekennzeichnet, daß die seitlichen Längsbalken (5) jeweils von einem einzigen Arm getragen sind, der an einem Ende am Balken und am anderen Ende am Fahrgestell (3) des Fahrzeugs (4) angelenkt ist, wobei dieser Arm aus zwei zusammengesetzten Schalen besteht, die am Gelenk am Fahrgestell ein an diesem verbundenes Zahnrad und am Galenk am Balken (5) ein am Arm angebrachtes Zahnrad gleichen Durchmssers enthalten, wobei beide Zahnräder durch eine ununterbrochene, mit ihnen eingreifende Kette miteinander verbunden sind.

10. Vorrichtung nach einem der Patentansprüche 1 bis 9, dadurch gekennzeichnet, daß die oberen Gelenke der seitlichen Arme (1, 2) durch eine erste steife Verstrebung und die unteren Gelenke derselben Arme durch eine zweite steife Verstrebung miteinander verbunden sind, wobei beide Verstrebungen mit den auf diese Weise vereinigten seitlichen Armen ein steifes Parallelogramm bilden.

## Claims

1. A device for unloading a removable container (8) from the vehicle (4) carrying it, said device comprising on each longitudinal side of the table-like chassis (3) of the carrier vehicle (4) one or more side arms (1, 2) operable simultaneously and pivoted by a first end thereof to said chassis and by the second end thereof to a respective longitudinal side balance arm, which in conjunction with its counterpart on the other side of the chassis supports the container (8) through slings (10) removably attached to the latter, characterized in that the container (8) is provided laterally, at the base of each rear post (16) thereof, with a trunnion (15) which, on placing the container (8) on the chassis of the vehicle (4), engages spontaneously into a respective V-shaped cradle (17) integral with the latter.

2. The device according to claim 1, characterized in that each cradle (17) extends rearwardly through an inclined slide rail (18) guiding the corresponding trunnion (15) towards the axis of the cradle, on its entering the latter.

3. The device according to claim 1 or 2, characterized in that an inextensible connection (20) is provided at an angle of approximately 45° with respect to the plane of the chassis table (3) of the carrier vehicle (4), between the rear part of each lateral side of the container and each rear arm of the balance arms (5).

4. The device according to claim 3, characterized in that the inextensible connections (20) are metal chains.

5. The device according to claim 3 or 4, characterized in that the inextensible connections (20), which are provided on each side of the container (8), are connected to each lateral side thereof at the anchoring point of the lower end of the rear slings (10), in order to be detachable from this anchoring point at the same time as the latter.

6. The device according to any of claims 1 to 5, characterized in that any load such as a vehicle may be loaded on or unloaded from the chassis (3) of the carrier vehicle, by simply operating the balance arms (5), straps being passed transversally under said load or under the chassis of said carried vehicle and connected to each lower end of the front and rear slings (10).

7. The device according to any of claims 1 to 6, characterized in that the container (8) comprises two inclined tracks (21, 22) disposed externally on each lateral side thereof, adjacent to each of its front and rear ends, said tracks cooperating with pivoting rollers (23, 24) disposed internally on vertical side structures of the chassis (3) of the vehicle (4) for guiding the container (8) merely by gravity towards the front of said chassis (3), as it seats on the latter, thereby automatically causing the rear trunnions (15) to enter the cradles (17) forming the locking members of the container (8) on table (3) at the same time as the rotation bearings of said container for the backward tipping thereof.

8. The device according to any of claims 1 to 7, characterized in that the carrier vehicle (4) is provided at the front thereof with a stop (14), which in conjunction with the cradles (17) serves as a means for securing the loaded container (8) on the vehicle.

9. The device according to any of claims 1 to 8, characterized in that the longitudinal side balance arms (5) are each carried by a single arm pivoted at one end thereof on said balance arm and at the other end thereof on the chassis (3) of the vehicle (4), said arm being formed by two assembled shells containing at the pivot with the chassis a sprocket wheel mounted on said chassis, and at the pivot with the balance arm (5) a sprocket wheel of the same diameter mounted on said balance arm, both wheels being connected together by a continuous chain meshing therewith.

10. The device according to any of claims 1 to 9, characterized in that the upper pivot points on the side arms (1, 2) are interconnected through a first rigid brace and the lower pivot points on the s ame arms are interconnected through a second rigid brace, whereby said two braces form a rigid parallelogram with the thus joined side arms.

FIG. 1

FIG. 2

FIG. 3

FIG. 4

FIG. 5